# EUROPEAN PATENT APPLICATION

(11) **EP 3 809 312 A1**
(43) Date of publication of application: **21.04.2021**
(21) Application number: 19203520.2
(22) Date of filing: 16.10.2019
(51) Int. Cl.: G06K 9/00, G06K 9/62

(54) **BIOMETRIC ENROLMENT AND AUTHENTICATION METHODS**

(71) Applicant: Idemia Middle East Fze, Dubai (AE)
(72) Inventor: DHOPTE, Anoop, Dubai (AE)
(74) Representative: Regimbeau

(57) **Abstract**

A method for biometric authentication, comprising: obtaining an alleged identity of an individual, starting acquiring images with an imager (3), and displaying acquired images and a position indicator (6) on a display screen (5), choosing at least one expected combination of fingers among a plurality of possible combinations of fingers, and prompting the individual to present said expected combination of fingers to the imager (3) at a location corresponding to the position indicator (6), extracting fingerprints from each finger in the target position of an acquired image and identifying therefrom the fingers of a presented combination of fingers among the fingers of the individual, using a database containing the fingerprints of fingers of the individual, confirming the alleged identity of the individual and authenticating the individual if the fingers of the presented combination of fingers correspond to the fingers of the expected combinations of fingers; or otherwise denying authentication of the individual.

## Description

### CONTEXT AND BACKGROUND OF THE INVENTION

The invention relates to the domain of biometrics. More precisely, the invention is a method for biometric authentication, wherein the identity of an individual is verified and liveness (i.e. spoof detection) is assessed at the same time.

Identification by fingerprints is one of the most used techniques in biometry. Fingerprints are formed by papillary ridges present on the epidermis at the surface of the skin. These papillary ridges, also called dermatoglyphs, are the exact projection of the design present at depth on the dermis. Papillary ridges have the advantage of being individual, immutable, and invariable, except for profound alteration of the dermis. As a result, fingerprints are often used for identifying an individual or verifying an alleged identity of an individual.

The first fingerprint acquisition methods required contact between the finger and a surface. The most used method consists in acquiring the image of the finger when it is against a surface and in exploiting the optical interactions between the finger and this surface. This is notably the case of the so-called total internal reflection method, better known under the acronym TIR, in which differences in the refractive indices between air and air Human skin to highlight ridges and valleys of fingerprints.

Nevertheless, the need for contact between the finger and the surface poses several problems. The finger must be stationary when acquiring the image to be processed and the process is slow, unsuitable for massive use in places of high traffic, such as airport controls, where the speed of control is important. Also, only one finger is often used, which weakens the robustness of the authentication with respect to fraud attempts.

Moreover, the quality of the image thus acquired depends on the state of the skin of the finger, which may be more or less dry, and the state of the surface, whose repeated contact with fingers can foul it, and therefore requires periodic cleaning. In addition, the surface contacting the skin of different people, problems of hygiene can arise, exacerbated by the fact that it is the fingers of these people which come into contact with the surface. It may then be necessary to provide equipment for cleaning and / or disinfecting the hands of persons after contact with the surface.

It has therefore been developed devices for acquiring images of fingerprints of at least part of a hand of an individual capable of operating without contact, usually by using an image of a finger acquired by an imager. However, there is a risk that a malevolent individual might try to fraud a method of authentication based on fingerprints by presenting something else rather than their own finger. The simplest spoofing method consists in presenting a photograph of a fingertip.

As a result, there is a need for a simple enrolment method and a simple authentication method that can detect fraud such as photograph presentation or video replays when fingerprints acquired without contact are used.

### SUMMARY OF THE INVENTION

The invention proposes a method for biometric authentication, comprising:
a) obtaining an alleged identity of an individual,
b) starting acquiring images from a field-of-view of an imager, and displaying acquired images on a display screen and displaying a position indicator on the display screen, the position indicator overlaying a target portion of the acquired images,
c) choosing at least one expected combination of fingers among a plurality of possible combinations of fingers, and prompting the individual to present said expected combination of fingers within the field-of-view of the imager at a location corresponding to the position indicator on the display screen, the fingers to be presented with their fingerprints facing the imager,
d) extracting fingerprints from each finger in the target position of an acquired image and identifying therefrom the fingers of a presented combination of fingers among the fingers of the individual, using a database containing the fingerprints of fingers of the individual,
e) confirming the alleged identity of the individual and authenticating the individual if the fingers of the presented combination of fingers correspond to the fingers of the expected combinations of fingers, then the alleged identity of the individual is verified; or otherwise denying authentication of the individual.

Other preferred, although non limitative, aspects of the authentication method of the invention are as follows, isolated or in a technically feasible combination:
- step c) comprises choosing at least two expected combination of fingers among a plurality of possible combinations of fingers, and prompting the individual to present successively a first expected combination of fingers and a second expected combination of fingers;
- step d) comprises extracting fingerprints from each finger in the target position of a first acquired image and identifying therefrom the fingers of a first presented combination of fingers among the fingers of the individual, using a database containing the fingerprints of fingers of the individual, and extracting fingerprints from each finger in the target position of a second acquired image and identifying therefrom the fingers of a second presented combination of finger among the fingers of the individual, using a database containing the fingerprints of fingers of the individual;
- step e) comprises confirming the alleged identity of the individual and authenticating the individual if the fingers of the first presented combination of fingers correspond to the fingers of the first expected combinations of fingers and the fingers of the second presented combination of fingers correspond to the fingers of the second expected combinations of fingers, then the alleged identity of the individual is verified; or otherwise denying authentication of the individual;
- the position indicator is positioned at a varying location on the display screen;
- the position indicator is positioned randomly on the display screen;
- the individual is prompted through an indication provided to the individual, the indication indicating the expected combinations of fingers that the individual must present within the field-of-view of the imager;
- the indication is provided as an audio message;
- in step c) the combinations of fingers are chosen randomly or are retrieved from a database associating each identity to personal information corresponding to a specific set of expected combinations of fingers;
- the expected combinations of fingers that the individual must present within the field-of-view of the imager correspond to a personal information stored within the database, thus implementing a knowledge-based verification.

The invention also proposes a method for biometric enrolment, comprising:
a) obtaining an identity of an individual,
b) starting acquiring images from a field-of-view of an imager, and displaying acquired images on a display screen and displaying a position indicator on the display screen, the position indicator overlaying a target portion of the acquired images,
c) prompting the individual to present at least two different expected combinations of fingers within the field-of-view of the imager at a location corresponding to the position indicator on the display screen, the fingers to be presented with their fingerprints facing the imager, wherein the two different expected combinations of fingers comprise a first expected combination of fingers and a second expected combination of fingers,
d) extracting fingerprints from each finger in the target position of a first acquired image and identifying therefrom the fingers of a first presented combination of fingers based on each fingerprint location in the target position and on the first expected combination of fingers, and extracting fingerprints from each finger in the target position of a second acquired image and identifying therefrom the fingers of a second presented combination of finger based on each fingerprint location in the target position and on the second expected combination of fingers,
e) associating, in a database, the fingerprints with their respective fingers and with the identity of the individual.

Other preferred, although non limitative, aspects of the method of the enrolment method of the invention are as follows, isolated or in a technically feasible combination:
- the first expected combination of fingers and the second expected combination of fingers share at least one common finger;
- at least one of the first expected combination of fingers and the second combination of fingers comprises at least three fingers;
- the first expected combination of fingers and the second combination of fingers comprise five different fingers;
- step c) comprises choosing at the least two different expected combinations of fingers are chosen among a plurality of possible combinations of fingers;
- the individual is prompted through an indication provided to the individual, the indication indicating the expected combinations of fingers that the individual must present within the field-of-view of the imager;
- the indication is provided as an audio message.

### BRIEF DESCRIPTION OF THE DRAWINGS

Other aspects, objects and advantages of the present invention will become better apparent upon reading the following detailed description of preferred embodiments thereof, given as non-limiting examples, and made with reference to the appended drawings wherein:
- Figures 1 and 2 show schematic examples of systems of biometric authentication according to possible embodiments of the invention,
- Figure 3 and 4 show examples of combinations of presented fingers appearing on the display screen within the position indicator.

### DETAILED DESCRIPTION OF THE INVENTION

### Device

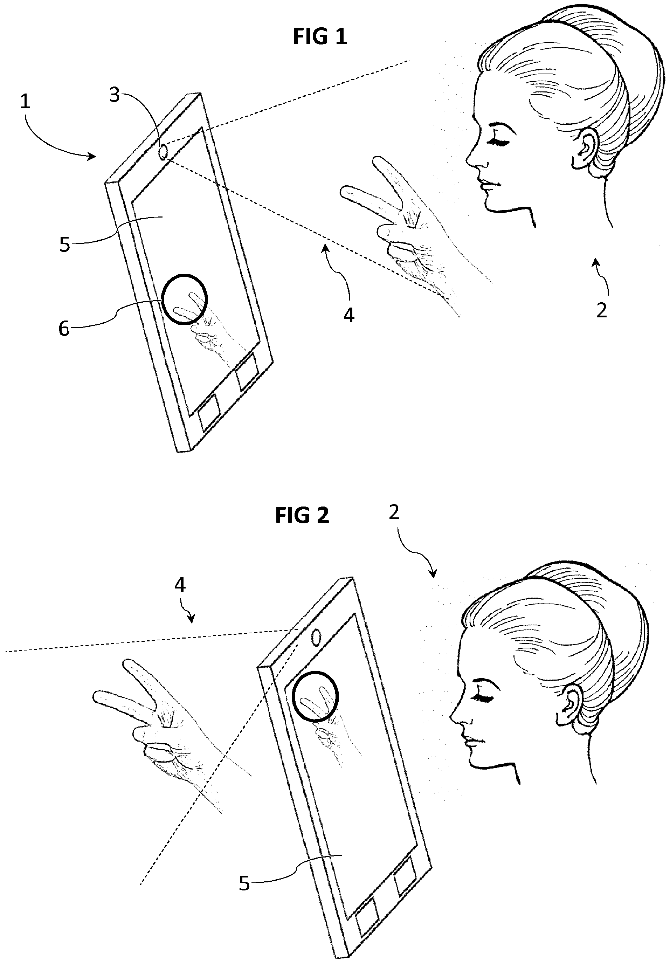

With reference to Figures 1 and 2, the enrolment method and the authentication method are implemented by a device 1 used by an individual 2. The device 1 comprises a processing unit, an imager 3 adapted to acquire images of objects presented in its field-of-view 4, and a display screen 5 capable of displaying images to the individual 2. More specifically, the device 1 is configured so that the individual 2 can simultaneously present fingers in the field-of-view of the imager 3, and look at the display screen 5. The imager 3 can be on the same side of the device 1 as the display screen 5, as depicted in Figure 1, facing the individual 2. It is also possible for the imager 3 to be on a side of the device 1 opposite the display screen 5, as depicted in Figure 2. The device 1 can thus be for example a smartphone-type handheld device, which has typically a suitable configuration between the imager 3 and the screen 5. The device 1 can nevertheless be any type of computerized device, and can particularly be a fixed terminal dedicated to the identity checks, for example installed in an airport. The processing unit comprises at least one processor and a memory, and allows executing a computer program for the implementation of the method.

### Presentation of combinations of fingers

The enrolment method and the authentication method are based on the presentation of at least one combination of fingers of an individual. A combination of fingers is a set of fingers that are to be shown in isolation from the other fingers, with their fingerprints visible by the imager 3. Humans have normally five fingers on the right hand, and five fingers on the left hand. On each hand, the first finger is conventionally the thumb, followed by index finger, middle finger, ring finger, and little finger. A combination of fingers consists in a list of fingers, and a combination of fingers comprises at least one finger. To realize such a combination of fingers, the individual can raise only the fingers of the combination raised, and keep the other fingers folded. The gesture is presented to the imager 5 with the hand turned so that the pulps of the fingers face the imager 3, and therefore the fingerprint can be visible in the acquired image.

In order to present the fingers of a combination of fingers, the presented fingers must be disposed within the field-of-view 4 of the imager at a location corresponding to a position indicator on the display screen 5. In order to allow the individual to present the fingers on the correct location within the field-of-view 4, the imager 3 acquires images, and acquired images are displayed on the display screen 5. Objects such as fingers presented in the field-of-view 4 of the imager 3 appear in the acquired images, and consequently are displayed on the display screen 5.

The display screen 5 also displays a position indicator. As on Figures 1 and 2, the position indicator 6 can be a circle, but it can be of any shape as long as it can indicate the position where the presented fingers must appear in the acquired images displayed by the display screen 5. Preferably, the position indicator 6 defines an inner space that corresponds to the intended position for the fingers. The position indicator 6 overlays a target portion of the acquired images, and the position indicator 6 thus indicates to the individual 2 the position of the target portion of the acquired images, corresponding to a location in the field-of-view 4 of the imager 3. The position indicator 6 (and corresponding target portion for the acquired images) preferably covers a minor portion of the displayed images, typically less than 35 % of the image on the display screen 5, preferably less than 25 %, and more preferably less than 15 %.

Without a position indicator 6, the fingers could be presented anywhere in the field-of-view 4 of the imager 3. The position indicator ensures that the positioning of the fingers is responsive to what is displayed on the display screen 5. Preferably, the position indicator 6 is positioned randomly on the display screen 5. The random positioning of the position indicator 6 prevents any replay fraud, i.e. a fraud based on the presentation of a video played on a screen (typically the screen of a smartphone) where the video shows a gesture responsive to a previous iteration of the method.

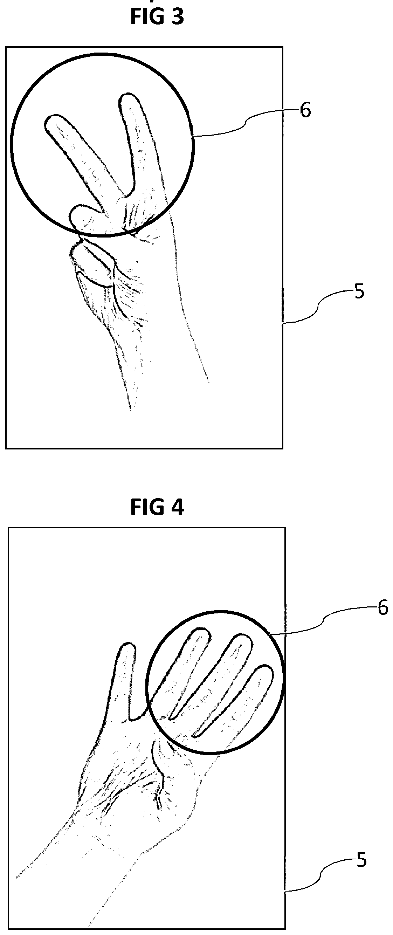

For example, the set of fingers consisting in the index finger and the middle finger of the right hand is a combination of fingers. Figure 3 shows how an individual 2 can present such a combination of fingers. The index finger and the middle finger are raised, whereas the other fingers, namely the thumb, the ring finger, and the little finger, are folded. The ring finger and the middle finger are positioned in such a way in the field-of-view 4 of the imager 3 that they appear at a location corresponding to the position indicator 6 on the display screen 5, i.e. within the circle in this example.

This way of doing is very natural, since it corresponds to the finger-counting gesture at least in Europe and America. If the presented fingers must be raised so that their fingerprints face the imager 3, folding the other fingers is however not required. The presented combination of fingers is the set of fingers that are present in the target position of the acquired image (corresponding to the location of the position indicator 6 on the display screen 5). As a result, a raised finger outside the target position of the acquired image (i.e. outside the position indicator 6 on the display screen 5) is not considered as presented, and therefore is not part of the fingers of the presented combination of fingers.

For example, Figure 4 shows a hand presenting a presented combination of fingers comprising the index finger, the middle finger, and the ring finger. Even if the little finger is raised rather than folded against the hand palm, the little finger appears outside the position indicator 6 on the display screen 5, meaning that the little finger is outside the target position of the acquired image. As a result, the little finger is not considered as a finger of the presented combination of fingers.

### Enrolment

Enrolment is the process of adding an individual's credentials to the database of the authentication system. During a biometric enrolment, biometric features such as fingerprints are acquired, and associated with the identity of an individual. The fingerprints are then used to verify the identity of the individual during subsequent authentication processes.

It is therefore very important to ensure that the fingerprints that are presented to the system during the enrolment process to be associated with the individual's identity actually correspond to the fingers of the person that is present during the enrolment. An enrolment accepting photographs or videos of fingers fraudulently presented by a malevolent person would lead to subsequent authentication processes to base the authentication on the same fraudulent photographs or videos of fingers, which can be transmitted between malevolent persons.

It is hereby proposed an enrolment method which aims at preventing such a fraud. At first, the identity of the individual 2 is obtained. Any method can be used for obtaining the identity. For example, the individual 2 may enter their name, a code, scan a document such as a passport.

The fingerprints must then be acquired in order to be associated with the identity of the individual. The individual 2 is prompted to present at least two different expected combinations of fingers within the field-of-view 4 of the imager 3 at the location corresponding to the position indicator 6 on the display screen 5.

The two different expected combinations of fingers that the individual 2 must present within the field-of-view 4 of the imager 3 can be the same for everyone. However, in order to strengthen the method's robustness to fraud, the method preferably has a step wherein the at least two different expected combinations of fingers are chosen among a plurality of possible combinations of fingers. The choice of the different expected combinations of fingers by the device 1 means that the two different expected combinations of fingers are not always the same, and may typically vary with each iteration of the enrolment and/or depending on the individual 2. The plurality of possible combinations of fingers may correspond to all the feasible combinations of fingers, i.e. 2ⁿ-1 for n fingers (at least one finger must be presented), or to a portion of the possible combinations of fingers, for example only the combinations with two fingers or combinations excluding a specific finger. The device 1 can for example select randomly two expected combinations of fingers among the possible combinations. The device 1 may also choose the combinations of fingers as a function of the identity of an individual, or on information associated with that identity.

The choice performed by the device 1 must preferably meet a number of requirements. The two different combinations of fingers comprise a first combination of fingers and a second combination of fingers having at least one finger in common. If more than two combinations of fingers are to be presented, each combination of fingers shares a common finger with at least one other combination of fingers. Preferably, the first expected combination of fingers and the second expected combination of fingers differs from one another by at least one finger. At least one of the first combination of fingers and the second combination of fingers comprises at least two fingers, and more preferably at least three fingers. Preferably, at least three different fingers are comprised either in the first expected combination of fingers or the second expected combination of fingers. The more fingers are used, the strongest the safety. Especially for enrolment, the different combinations of fingers preferably regroup together at least four fingers of one hand, and more preferably the five fingers of one hand. Even more preferably, the different combinations of fingers regroup together at least five fingers, preferably at least eight fingers (of both hands), and more preferably the ten fingers.

The individual 2 can be prompted by the mere display of the position indicator 6 on the display screen 5, if the individual knows how to operate, or for example by a written statement on the device 1. Preferably, the two different combinations of fingers are specific to the individual and/or the iteration of the method. Accordingly, the individual 2 is preferably prompted through an indication provided to the individual 2, the indication indicating the combinations of fingers that the individual must present.

The indication can be given to the individual 2 as a visual indication on the screen display 5. Preferably, the indication can be given as an audio indication, e.g. a voice from speakers that reads out words. Such an indication helps ensure that the individual 2 is physically present in front of the device 1, and is responsive to the indication (liveness evaluation).

The individual 2 is asked to present successively the at least two different combinations of fingers within the field-of-view 4 of the imager 3 at a location corresponding to the position indicator 6 on the display screen 5.

The indication can be given for the different combinations of fingers at the same time before any presentation of fingers, or the indication can comprise two parts: a first part related to the first combination of fingers, and a second part related to the second combination of fingers, the second part being provided to the individual 2 after the presentation of the first combination of fingers.

For example, a message displayed on the display screen 5 or a voice may ask the individual 2 to present a first combination comprising the thumb, the middle finger, and the ring finger, and then to present a second combination of fingers comprising the index finger, the ring finger and the little finger. The common finger, e.g. the ring finger in this example, is used to validate that the two presented combinations are from the same individual 2. The fingerprints of the common finger must be the same in the two presented combinations of fingers to validate the extracted fingerprints.

The imager 3 starts acquiring images, and acquired images are displayed on a display screen 5. A source light can illuminate the field-of-view 4 of the imager 3 to improve the quality of the acquired images. The display screen 5 also displays the position indicator 6. The individual 2 must present the first combination of fingers so that the first presented fingers appear on the display screen 5 at the location indicated by the position indicator 6. For the enrolment method, the position indicator may not be necessarily at a random position, and can even be in a fixed position, even if a random position is preferable.

The first presented fingers appear in the target position in the images acquired by the imager 3. The individual must keep presenting the first presented fingers until the device 1 has managed to extract the fingerprints from an acquired image. A time limit can be set for doing so. Typically, the imager 3 start focusing on the fingertips to get a clear image of the fingerprints. When an acquired image is considered as displaying the fingerprints clearly enough, fingerprints from each finger in the target position of the acquired image are extracted.

Each extracted fingerprint is then associated to the finger to which they correspond, based on their location within the target position. For example, if the requested combination of fingers was the index finger and the middle finger of the right hand, as illustrated on Figure 3, then the fingerprint extracted from the rightmost part of the target portion is assumed to be the fingerprint of the index finger of the right hand, and the fingerprint extracted from the leftmost part of the target portion is assumed to be the fingerprint of the middle finger of the right hand. Once extracted, the fingerprints are stored in association with the individual's alleged identity and associated with the finger to which each fingerprint belongs.

A signal can given to the individual to indicate that now the second combination of fingers must be presented. The signal can be a sound, a change of colour, shape or size of the position indicator, for example to indicate that a clear image has been acquired or that fingerprints were successfully extracted. The signal can also be an instruction (visual or auditive) that the second combination of fingers must now be presented. The signal can also contain the second part of the indication, related to the second combination of fingers, if only a first part related to the first combination of fingers was provided to the individual before the presentation of the first combination of fingers. It is also possible that the individual 2 performs an action such as clicking a button (for example appearing on the display screen 5) to indicate that the required combination of fingers is presented.

The individual then presents the second combination of fingers so that the second presented fingers appear on the display screen 5 at the location indicated by the position indicator 6. The process is the same as for the first combination of fingers: the fingerprints are extracted from each finger in the target position of the acquired image, the fingerprints are stored in association with the individual's identity, and a signal is given to indicate a successful acquisition or fingerprint extraction.

With the described enrolment, the fingerprints of the individual have been obtained and are associated with the individual's identity and associated with the finger to which each fingerprint belongs. In addition, the enrolment is robust to fraud. If there is a discrepancy between the extracted fingerprints and what should have been expected in response to the indication given to the individual 2, that means that there is a problem and the enrolment fails. For example, if the number of fingerprints extracted from an acquired image does not match the number of fingers in the expected combination of fingers, it means that the presented combination of fingers was not the expected combination of fingers. This means that the individual 2 did not properly respond to the indication, which indicates a high probability of a fraud. For example, a malevolent individual may have presented a photograph or a video showing a wrong combination of fingers. In such case, the enrolment fails, and action can be triggered accordingly (for instance the individual's identity can be flagged as fraudulent in a database).

The fact that each expected combination of finger shares a common finger with another expected combination of finger allows to ensure that the same hand is presented for both combinations. The fingerprints of the common finger must be the same in the two acquired images. Otherwise, the enrolment fails, and action can be triggered accordingly (for instance the individual's identity can be flagged as fraudulent in a database).

### Authentication

Once an individual 2 has been enrolled, it is possible for the individual 2 to authenticate their identity through a method for biometric authentication using the fingerprints that have been stored during enrolment. Many features of the authentication method are the same as the features of the enrolment method. The description below is therefore mainly focused on the differences between the authentication method and the enrolment method, and any information given with respect to the enrolment can be used for the authentication.

At first, an alleged identity of an individual is obtained. Any method can be used for obtaining the identity. For example, the individual 2 may enter their name, a code, scan a document such as a passport or present their face or any other biometric feature. The alleged identity of the individual 2 must be verified to ensure that the alleged identity actually correspond to the identity of the individual 2.

The device 1 then chooses at least one expected combination of fingers among a plurality of possible combinations of fingers, and preferably at least two expected combination of fingers among a plurality of possible combinations of fingers. The choice of the expected combinations of fingers by the device 1 means that the expected combinations of fingers are not always the same, and may typically vary with each iteration of the enrolment and/or depending on the individual 2. The plurality of possible combinations of fingers may correspond to all the feasible combinations of fingers, i.e. 2ⁿ-1 for n fingers (at least one finger must be presented), or to a portion of the possible combinations of fingers, for example only the combinations with two fingers or combinations excluding a specific finger. The expected combinations of fingers can be randomly chosen at each iteration of the authentication process, or at least be unrelated to the alleged identity of the individual 2. Preferably however, the expected combinations of fingers are related to the alleged identity of the individual 2, and are retrieved from a database associating each identity to a specific set of expected combinations of fingers. In particular, through the expected combinations of fingers, it is possible to perform a knowledge-based verification (KBV) that requires the knowledge of private information of the individual 2 to prove that the individual 2 providing the identity information is the owner of the provided alleged identity. Instead of explicitly providing to the individual 2 the expected combinations of fingers, the indication provided to the user can consist in a question asking a private information related to the alleged identity. The database can store information such as age, date of birth or any other personal information (typically shared secret questions), and derive expected combinations of fingers therefrom.

For example, a question about a year of birth or birthday can appear on the screen 5 or be asked by a voice from the device 1. The individual 2 must then present the combinations of fingers that correspond to the correct answer. It is possible to have a code that assign a signification to each combination of fingers. For instance, fingers of the right hand (from thumb to little finger) can correspond to digits 1, 2, 3, 4, 5, respectively, and fingers of the left hand (from thumb to little finger) can correspond to digits 6, 7, 8, 9, 0, respectively. An individual 2 with a date of birth 28 will therefore have to show first the index finger of the right hand (digit 2) as a first combination of fingers, and then the middle finger of the left hand (digit 8) as the second combination of fingers. In another example, if the individual 2 is asked to provide their age, an individual 2 aged 34 will therefore have to show first the middle finger of the right hand (digit 3) as a first combination of fingers, and then the ring finger of the right hand (digit 4) as the second combination of fingers. There are plenty of other possibilities. For example, the display screen 5 may display a plurality of answers each associated with a number, and the expected combinations of fingers may then correspond to the correct answer.

Using combinations of fingers that are specific to each identity also allows to adapt the combinations of fingers to particularities of some persons. For example, if someone is missing a finger, the set of possible combinations of fingers specifically associated with that person's identity will not comprise combinations of fingers requiring presenting the missing finger.

The choice performed by the device 1 must preferably meet a number of requirements. The expected combinations of fingers for the authentication method can meet the same requirements as the different expected combinations of fingers for the enrolment method. It is however possible to meet only some requirements of the enrolment method, or none of them. Typically, the expected combinations of fingers for the authentication method do not necessarily have a common finger and may comprise fewer fingers. If only one expected combination of fingers is to be presented, the expected combination of fingers comprises preferably at least two fingers.

The individual 2 is prompted to present at least one combination of fingers within the field-of-view 4 of the imager at the location corresponding to the position indicator 6 on the display screen 5. Preferably, the individual 2 is prompted to present at least two different combinations of fingers within the field-of-view 4 of the imager at the location corresponding to the position indicator 6 on the display screen 5. The description below is made in reference to such a preferable embodiment. It shall be noted however that the teachings here are applicable to any number of combinations. The individual 2 can be prompted by the mere display of the position indicator 6 on the display screen 5, if the individual knows how to operate, or for example by a written statement on the device 1. Preferably, the combinations of fingers are specific to the individual 2 and/or the iteration of the method. Accordingly, the individual 2 is preferably prompted through an indication provided to the individual 2, the indication indicating the combinations of fingers that the individual 2 must present.

The indication can be given to the individual 2 as a visual indication on the screen display 5. Preferably, the indication can be given as an audio indication, e.g. a voice from speakers that reads out words. Such an indication helps ensure that the individual 2 is physically present in front of the device 1, and is responsive to the indication (liveness evaluation).

As in the enrolment method, the imager 3 starts acquiring images, and acquired images are displayed on the display screen 5. The display screen 5 also displays the position indicator 6. The position indicator 6 overlays a target portion of the acquired images. The individual 2 must present the first combination of fingers so that the first presented fingers appear on the display screen 5 at the location indicated by the position indicator 6. In order to prevent frauds based on video replay, the location of the position indicator 6 on the screen 5 may vary between iterations of the authentication process. Preferably, the position indicator 6 appears at a random location on the screen 5. The individual 2 must then present the second combination of fingers so that the second presented fingers appear on the display screen 5 at the location indicated by the position indicator 6. Preferably, the location of the position indicator 6 is changed between the first combination of fingers and the second combination of fingers.

For example, Figure 3 shows a first presented combination of fingers as they appear on the display screen 5. The ring finger and the middle finger are positioned in such a way in the field-of-view of the imager 3 that they appear at a location corresponding to the position indicator 6 on the display screen 5, i.e. within the circle in this example. For the first combination of fingers, the position indicator 6 is located on the upper left part of the display screen 5. Figure 4 shows the subsequent second presented combination of fingers as they appear on the display screen 5. The position indicator 6 is now located on the middle right part of the display screen 5. As already explained, the presented combination of fingers is here the index finger, the middle finger, and the ring finger.

Fingerprints are then extracted from each finger in the target position of the first acquired image where the first presented fingers appear. The fingers of the first presented combination of fingers among the fingers of the individual 2 are then identified from the extracted fingerprint, using a database containing the fingerprints of fingers of the individual 2, typically the database obtained through the enrolment process.

Fingerprints are also extracted from each finger in the target position of the second acquired image where the second presented fingers appear. The fingers of the second presented combination of fingers among the fingers of the individual 2 are then identified from the extracted fingerprint, using a database containing the fingerprints of fingers of the individual 2, typically the database obtained through the enrolment process.

If the fingers of the first presented combination of fingers correspond to the fingers of the first expected combinations of fingers and the fingers of the second presented combination of fingers correspond to the fingers of the second expected combinations of fingers, it means that the identity of the individual 2 is verified. The device 1 may then confirm the alleged identity of the individual 2 and authenticate the individual 2.

Conversely, if the authentication process fails to identify the correct combinations of fingers in the acquired images, authentication is denied. For example, if the fingers of the first presented combination of fingers does not correspond to the fingers of the first expected combinations of fingers or the fingers of the second presented combination of fingers does not correspond to the fingers of the second expected combinations of fingers, the device 1 denies authentication of the individual 2.

Indeed, a mismatch between the presented combinations of fingers and the expected combinations of fingers could mean that the individual 2 may have presented fingers whose fingerprints do not match the fingerprints stored in the database and associated with the alleged identity, immediately indicating that a malevolent individual is trying to usurp the alleged identity. Also, it may indicate that the individual 2 did not properly respond to the indication regarding the expected combinations of fingers, which indicates a high probability of a fraud. For example, a malevolent individual may have presented a photograph or a video showing a wrong combination of fingers. With a varying location of the position indicator, the fraudulently presented fingers may have been presented on a wrong location within the field-of-view of the imager 3, prohibiting the device 1 from identifying the fingers.

Of course, if there is only one expected combination of fingers, the individual 2 is prompted the individual to present only the expected combination of fingers, and fingerprints are extracted from only one presented combination of fingers. The alleged identity of the individual 2 is confirmed and the individual 2 is authenticated only if the fingers of the presented combination of fingers correspond to the fingers of the expected combinations of fingers.

While the present invention has been described with respect to certain preferred embodiments, it is obvious that it is in no way limited thereto and it comprises all the technical equivalents of the means described and their combinations. In particular, it will be apparent to those skilled in the art that various changes and modifications may be made without departing from the scope of the invention as defined in the appended claims.

## Claims

1. Method for biometric authentication, comprising:
a) obtaining an alleged identity of an individual,
b) starting acquiring images from a field-of-view of an imager (3), and displaying acquired images on a display screen (5) and displaying a position indicator (6) on the display screen (5), the position indicator (6) overlaying a target portion of the acquired images,
c) choosing at least one expected combination of fingers among a plurality of possible combinations of fingers, and prompting the individual to present said expected combination of fingers within the field-of-view (4) of the imager (3) at a location corresponding to the position indicator (6) on the display screen (5), the fingers to be presented with their fingerprints facing the imager (3),
d) extracting fingerprints from each finger in the target position of an acquired image and identifying therefrom the fingers of a presented combination of fingers among the fingers of the individual, using a database containing the fingerprints of fingers of the individual,
e) confirming the alleged identity of the individual and authenticating the individual if the fingers of the presented combination of fingers correspond to the fingers of the expected combinations of fingers, then the alleged identity of the individual is verified; or otherwise denying authentication of the individual.

2. The method for biometric authentication of claim 1, wherein step c) comprises choosing at least two expected combination of fingers among a plurality of possible combinations of fingers, and prompting the individual to present successively a first expected combination of fingers and a second expected combination of fingers, and
wherein step d) comprises extracting fingerprints from each finger in the target position of a first acquired image and identifying therefrom the fingers of a first presented combination of fingers among the fingers of the individual, using a database containing the fingerprints of fingers of the individual, and extracting fingerprints from each finger in the target position of a second acquired image and identifying therefrom the fingers of a second presented combination of finger among the fingers of the individual, using a database containing the fingerprints of fingers of the individual, and
wherein step e) comprises confirming the alleged identity of the individual and authenticating the individual if the fingers of the first presented combination of fingers correspond to the fingers of the first expected combinations of fingers and the fingers of the second presented combination of fingers correspond to the fingers of the second expected combinations of fingers, then the alleged identity of the individual is verified; or otherwise denying authentication of the individual.

3. The method of any one of claim 1 or, wherein the position indicator (6) is positioned at a varying location on the display screen (5).

4. The method of claim 3, wherein the position indicator (6) is positioned randomly on the display screen (5).

5. The method of any one of claims 1 to 4, wherein the individual is prompted through an indication provided to the individual (2), the indication indicating the expected combinations of fingers that the individual must present within the field-of-view (4) of the imager (3).

6. The method of claim 5, wherein the indication is provided as an audio message.

7. The method of any one of claims 1 to 6, wherein in step c) the combinations of fingers are chosen randomly or are retrieved from a database associating each identity to personal information corresponding to a specific set of expected combinations of fingers.

8. The method of claim 7, wherein the expected combinations of fingers that the individual must present within the field-of-view (4) of the imager (3) correspond to a personal information stored within the database, thus implementing a knowledge-based verification.

9. A method for biometric enrolment, comprising:
a) obtaining an identity of an individual,
b) starting acquiring images from a field-of-view of an imager (3), and displaying acquired images on a display screen (5) and displaying a position indicator (6) on the display screen (5), the position indicator (6) overlaying a target portion of the acquired images,
c) prompting the individual to present at least two different expected combinations of fingers within the field-of-view of the imager (3) at a location corresponding to the position indicator (6) on the display screen (5), the fingers to be presented with their fingerprints facing the imager (3), wherein the two different expected combinations of fingers comprise a first expected combination of fingers and a second expected combination of fingers,
d) extracting fingerprints from each finger in the target position of a first acquired image and identifying therefrom the fingers of a first presented combination of fingers based on each fingerprint location in the target position and on the first expected combination of fingers, and extracting fingerprints from each finger in the target position of a second acquired image and identifying therefrom the fingers of a second presented combination of finger based on each fingerprint location in the target position and on the second expected combination of fingers,
e) associating, in a database, the fingerprints with their respective fingers and with the identity of the individual.

10. The method of claim 9, wherein the first expected combination of fingers and the second expected combination of fingers share at least one common finger.

11. The method of any one of claims 9 to 10, wherein at least one of the first expected combination of fingers and the second combination of fingers comprises at least three fingers.

12. The method of any one of claims 9 to 11, wherein the first expected combination of fingers and the second combination of fingers comprise five different fingers.

13. The method of any one of claims 9 to 12, wherein step c) comprises choosing the at least two different expected combinations of fingers are chosen among a plurality of possible combinations of fingers.

14. The method of any one of claims 9 to 13, wherein the individual is prompted through an indication provided to the individual (2), the indication indicating the expected combinations of fingers that the individual must present within the field-of-view (4) of the imager (3).

15. The method of claim 14, wherein the indication is provided as an audio message.
